# DEMANDE DE BREVET EUROPEEN

(11) **EP 2 060 828 A1**
(43) Date de publication de la demande: **20.05.2009**
(21) Numéro de dépôt: 08168927.5
(22) Date de dépôt: 12.11.2008
(51) Int. Cl.: F16H 3/089, F16H 3/12, F16H 61/684

(54) **Boîte de vitesses à dérivation de couple et procédé de changement de rapport associé**

(30) Priorité: 15.11.2007 FR 0759070
(71) Demandeur: PEUGEOT CITROËN AUTOMOBILES S.A., 78140 Vélizy Villacoublay (FR)
(72) Inventeur: Mitchell, Clément, 92250, La Garenne Colombes (FR); Lelasseux, Xavier, 92150, Suresnes (FR)

(57) **Abrégé**

L'invention se rapporte à une boîte (4) de type mécanique pilotée comportant :
- un arbre (7) primaire destiné à être relié à un moteur (2), et un arbre (8) secondaire destiné à être relié aux roues (5) du véhicule, ces deux arbres (7, 8) étant reliés entre eux par des engrenages formant les rapports de vitesse,
- ces engrenages comportant chacun une roue (10-13, 21, 22) solidaire en rotation d'un des arbres et un pignon fou (15-18, 23, 24) monté sur l'autre arbre qui engrènent entre eux, et
- des manchons de crabotage (27-29), munis de crabots (60) et associables chacun à deux pignons fous, également munis de crabots (62), ces manchons de crabotage (27-29) assurant le changement des rapports de vitesse,
- un organe (31) de friction associé à un rapport de démultiplication, cet organe (31) de friction transmettant du couple par glissement de manière temporaire lors des changements de rapports via ce rapport de démultiplication,
- des moyens pour exercer, lors d'un changement de rapport, un effort prédéterminé de désengagement sur le manchon de crabotage (28) du rapport initial pour le désengager avant que le couple transmis via ce rapport initial ne soit nul.

## Description

L'invention est relative à une boîte de vitesses à dérivation de couple par un rapport final ou intermédiaire, et à un procédé de changement de rapport mettant en oeuvre une telle boîte de vitesses. L'invention a notamment pour but d'améliorer le ressenti des changements de rapports d'une boîte de vitesses en évitant les ruptures de couple.

L'invention trouve une application particulièrement avantageuse dans le domaine des boîtes de vitesses mécaniques pilotées pour véhicule automobile. Toutefois, l'invention peut également être mise en oeuvre avec les véhicules à deux roues motorisés.

Les véhicules connus comportent une chaîne de traction formée par un dispositif de propulsion (formé par un moteur thermique et/ou une machine électrique), un embrayage, et une boîte de vitesses qui entraîne les roues du véhicule. L'embrayage est relié d'une part au dispositif de propulsion et d'autre part à la boîte de vitesses, elle-même reliée aux roues.

De manière connue, une boîte de vitesses mécanique comporte un arbre primaire relié à l'embrayage et un arbre secondaire relié aux roues du véhicule, ces deux arbres étant reliés entre eux par l'intermédiaire d'engrenages formant les rapports de vitesse.

Chaque engrenage comporte une roue liée en rotation à un des arbres et un pignon fou monté sur l'autre arbre. Des manchons de crabotage sont utilisés pour lier sélectivement les pignons fous à l'arbre sur lequel ils sont montés afin d'assurer l'engagement d'un rapport de vitesses.

A cet effet, chaque manchon est lié en rotation à son arbre mais est mobile axialement pour permettre l'accrochage avec le pignon fou. On parle de crabotage lorsque le manchon entre en coopération avec le pignon fou de sorte qu'un rapport de vitesse est engagé, et de décrabotage lorsque le manchon se dégage du pignon fou de sorte que le rapport est désengagé.

Une boîte de vitesses à crabots classiques, présente plusieurs inconvénients majeurs :
- des chocs générés par l'égalisation instantanée des vitesses de rotation (contrairement à un synchroniseur),
- un jeu de ré-attelage (le jeu de ré-attelage est le jeu angulaire existant, rapport engagé, entre le pignon fou et le manchon) important : ce jeu important est source d'inconfort lorsque le couple transmis change de signe passant de moteur menant à moteur mené, par exemple dans une situation de suivi de file sur autoroute, et
- une rupture de couple pendant le changement de rapport.

Les boîtes de vitesses les plus répandues comportent en outre des synchroniseurs qui ont pour rôle d'amener le crabot et le pignon fou à engrener à des vitesses de rotation quasi-identiques avant de réaliser le crabotage.

Pour remédier à ces inconvénients, il est connu d'utiliser un ou plusieurs organe(s), associé(s) au rapport de démultiplication final ou à un rapport intermédiaire, pour réaliser la synchronisation du crabot et du pignon fou concernés lors d'un changement de rapport. L'organe utilisé est un organe de friction, tel qu'un embrayage à disques ou à bagues coniques, qui permet de transmettre du couple pendant les changements de rapport.

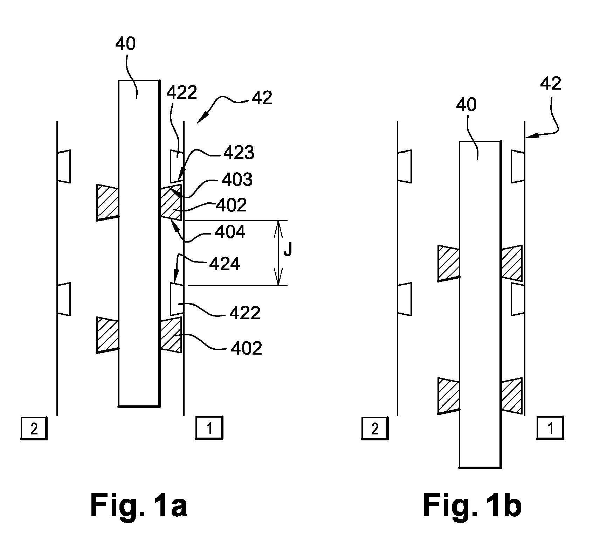

Associer une boîte de vitesses à dérivation de couple avec des crabots conventionnels présente un inconvénient majeur, lié à la difficulté de désengager le manchon de crabotage du rapport initial lors d'un changement de rapport. Les figures 1a et 1b représentent schématiquement un manchon de crabotage conventionnel ainsi que les deux pignons fous associés, correspondant chacun à un rapport de vitesse distinct. La figure 1a montre ainsi un manchon de crabotage 40 qui entraîne un pignon fou 42. Le manchon de crabotage 40 et le pignon fou 42 sont à cet effet pourvus de dents de crabotage (ou crabots) aptes à coopérer ensemble, respectivement 402 pour le manchon et 422 pour le pignon fou. Chacune de ses dents comprend deux faces d'appui, ci-après dénommées face « tirage » et face « rétro ». Les faces tirage 403, 423 sont en contact lorsque le manchon de crabotage 40 entraîne le pignon fou 42 de manière que le moteur transmette aux roues un couple positif. A l'inverse, les faces rétro 404, 424 sont en contact lorsque le pignon fou 42 entraîne le manchon de crabotage 40, le moteur transmettant alors aux roues un couple négatif (par exemple dans le cas d'une utilisation du « frein moteur »). Chaque face des dents est inclinée par rapport à l'axe de rotation, formant ainsi un angle dit « d'anti-lâcher », qui permet d'éviter tout désengagement intempestif du manchon de crabotage lorsqu'un couple est transmis. La figure 1a montre également le jeu J de ré-attelage, qui est le jeu existant, rapport engagé, entre deux faces rétro en vis-à-vis du manchon de crabotage et du pignon fou.

Cet intervalle angulaire entre les dents voisines du manchon de crabotage et du pignon fou, dont le rôle essentiel est de permettre au manchon de craboter le pignon fou alors que les deux pièces tournent à des régimes différents, permet d'autre part le désengagement du manchon lorsque le pignon fou ralentit, à l'occasion d'un changement de rapport. Ce désengagement est obtenu en exerçant un effort axial sur le manchon de crabotage 40, et cette opération doit être suffisamment rapide car dans le cas contraire, les faces rétro du manchon et du pignon fou viennent en contact, avec pour conséquence le blocage du manchon, comme représenté sur la figure 1 b. Or, dans le cas d'une boîte de vitesses à dérivation de couple associée à des crabots conventionnels présentant un jeu de réattelage réduit, le désengagement ne peut être effectué assez rapidement pour éviter ce risque de blocage.

En effet, l'organe de frottement assure une dérivation de couple qui permet, en plus de transmettre du couple pendant le changement de rapport, de supprimer le choc inhérent à l'utilisation de crabots, source d'inconfort tout en conservant l'architecture conventionnelle. Ainsi, lors d'un passage d'un rapport N vers N+1, l'organe de frottement transmet progressivement du couple par glissement (on utilise le fait que l'arbre primaire lié au moteur évolue à une vitesse de rotation plus importante que celui du pignon moteur du rapport final) jusqu'à provoquer la chute du régime d'arbre primaire. Dès que le rapport N+1 est engagé, l'organe de frottement est progressivement désactivé et le couple est intégralement transmis par le rapport N+1.

Si des crabots classiques étaient utilisés avec l'organe de frottement, il serait très difficile de désengager le rapport N dès que la rupture du contact entre les faces tirage (qui assurent la transmission du couple lorsqu'un couple positif est transmis du moteur vers les roues) est détectée. En effet, le risque est de ne pas désengager suffisamment rapidement le rapport N et de provoquer un blocage cinématique de la boîte de vitesses par contact entre les faces rétro qui assurent la transmission du couple lorsqu'un couple positif est transmis des roues vers le moteur.

Le risque identifié est considérable puisque le jeu de ré-attelage est minimum (d'autant plus lorsqu'on utilise des crabots bi-étages qui présentent la particularité de présenter un jeu angulaire réduit en rapport engagé). Une solution possible serait d'augmenter le jeu de ré-attelage, mais cela serait très néfaste pour le confort ressenti par l'usager dans certaines situations telles que le « suivi de file », ou le couple moteur est amené à changer fréquemment de signe : en effet, chaque alternance de sens du couple se traduit par un changement des faces en appui, faces tirage ou face rétro, du manchon et du pignon. Ainsi, augmenter le jeu de ré-attelage génère des chocs à chaque contact des faces tirage ou rétro qui sont préjudiciables au confort de fonctionnement.

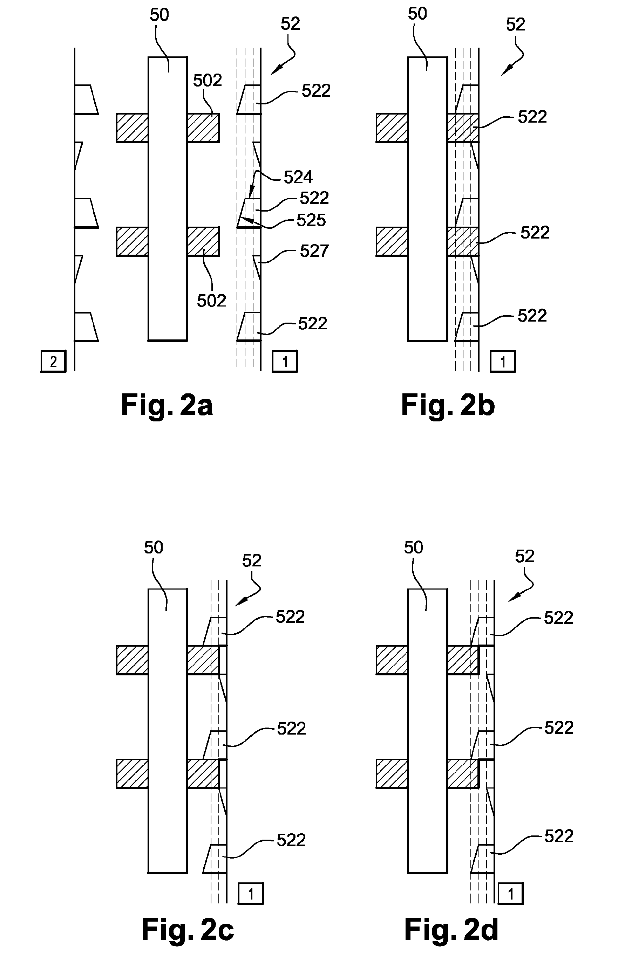

Pour pallier à cet inconvénient, il est connu, notamment par la demande de brevet français n° 07 55178, une boîte de vitesses à dérivation de couple par un ou plusieurs rapports supérieurs, utilisant un ou plusieurs organes de friction, permettant de transmettre un couple par friction lors des changements de rapport, la boîte étant équipée de crabots dit « auto-éjectants », permettant le désengagement automatique du rapport initial. Les figures 2a, 2b, 2c, et 2d représentent schématiquement un manchon de crabotage et un pignon fou équipés de tels crabots auto-éjectants. Ces crabots présentent un profil à plusieurs « étages » selon la direction axiale. Le manchon de crabotage 50 présente des dents classiques, mais le pignon fou 52 présente des dents 522 avec un profil adapté : chaque dent 522 du pignon fou présente une rampe sur son flan rétro 524 une rampe 525 permettant dans certaines conditions l'éjection du manchon de crabotage 50. En outre, le pignon fou comporte également à proximité de chaque dent un étage de verrouillage 527, ces étages de verrouillage permettant de limiter le jeu de ré-attelage entre les dents du manchon et les dents du pignon en position verrouillée. Ces étages 527 présentent un profil triangulaire de manière à faciliter le verrouillage du rapport de vitesse, l'inclinaison des étages 527 étant opposée à celle des rampes 525. D'autre part les dents 502 du manchon présentent une largeur légèrement inférieure à la distance qui sépare un étage 527 de verrouillage d'une dent 522.

Le manchon de crabotage 50 est apte à prendre quatre positions différentes : une position neutre (figure 2a), une position « rapport verrouillé » (figure 2b), une position « rapport engagé avec un jeu de ré-attelage important » (figure 2c), et une position « rapport engagé auto-éjectable » (figure 2d). Ainsi, lors d'un changement de rapport, le manchon de crabotage 50 du rapport initial passe de la position « verrouillé » (figure 2b) à la position « rapport engagé auto-éjectable » (figure 2d), le pignon fou transmettant alors toujours du couple. L'organe de friction est alors progressivement actionné de façon à transmettre un couple de dérivation croissant. Au moment où le couple de dérivation généré est suffisant, la vitesse de l'arbre primaire et des éléments qui lui sont liés diminue.

Le pignon fou 52 voit donc sa vitesse diminuer alors que le manchon de crabotage 50 conserve une vitesse de rotation constante. La face 525 d'éjection des dents 522 du pignon entre donc en contact avec les dents du manchon de crabotage, ce qui a pour conséquence d'éjecter ce dernier, qui revient en position neutre (rapport désengagé, figure 2a).

Une telle configuration présente cependant l'inconvénient de nécessiter des crabots spécifiques tels que décrits ci-dessus, ce qui a un impact négatif, d'une part, sur les coûts de production et, d'autre part, sur l'intégration, du fait de l'encombrement axial de ce type de crabots en comparaison avec des crabots conventionnels. En outre, le pilotage de la boîte doit être à même de déplacer le manchon de crabotage, au moyen d'une fourchette, afin de pré positionner les crabots dans la position de la figure 2d avant l'actionnement du système de dérivation de couple, alors qu'un couple est simultanément transmis par les faces en contact. Cette opération est rendue très difficile par les angles d'anti-lâcher pratiqués au niveau des faces d'appui, qui sont indispensables pour garantir que le rapport ne puisse pas être désengagé sans action de la fourchette sur le manchon. Ainsi, cette opération nécessite un effort très important sur le manchon, ce qui conduirait, entres autres inconvénients, à une détérioration très rapide de la fourchette.

On connaît également du document FR2 794 512-A1, un procédé de contrôle de changement de vitesse sous couple conforme au préambule de la revendication 1.

L'invention propose de pallier les inconvénients exposés ci-dessus, en permettant l'association une boîte de vitesses à dérivation de couple à des crabots conventionnels tout en assurant le désengagement correct du rapport initial lors d'un changement de rapport.

Ainsi, l'invention concerne une boîte de vitesses de type mécanique pilotée conforme à l'objet de la partie caractérisante de la revendication 1.

Dans une réalisation, la valeur de l'angle d'anti-lâcher de chaque rapport est telle que la force axiale nécessaire au désengagement d'un manchon de crabotage lors d'un changement de rapport est identique pour tous les rapports de démultiplication de la boîte de vitesses.

Dans une réalisation, lorsque tous les pignons fous sont disposés sur l'arbre primaire, l'angle d'anti-lâcher est croissant du premier rapport au rapport final.

Dans une réalisation, la valeur de l'effort prédéterminé de désengagement est déterminée de manière à ce que le désengagement se produise lorsque la valeur du couple transmis par le pignon du rapport initial atteint une valeur seuil, dite couple de décrabotage,

Dans une réalisation, la valeur seuil du couple de décrabotage est fixée en fonction d'un niveau acceptable de confort ressenti lors du changement de rapport.

Dans une réalisation, les crabots des pignons fous présentent une face de dévirage formant un angle de dévirage β avec la direction axiale.

Dans une réalisation, la boîte de vitesses comporte un deuxième arbre secondaire.

L'invention concerne également un procédé de changement de rapport de vitesses pour passer d'un rapport initial à un rapport final, ce procédé mettant en oeuvre la boîte de vitesses définie ci-dessus et comportant les étapes suivantes :
- ouvrir l'embrayage de manière à le mettre à la limite du couple fourni par le moteur,
- actionner l'organe de frottement de manière à réduire progressivement le couple transmis par le rapport initial jusqu'au couple nul,
- exercer un effort prédéterminé de désengagement du manchon de crabotage du rapport initial, cet effort étant exercé avant que le couple transmis par le rapport initial ne soit nul, afin le manchon de crabotage du rapport initial soit totalement désengagé avant que ce couple ne devienne nul.
- piloter la diminution du régime de l'arbre primaire jusqu'à atteindre sensiblement le régime du rapport final à engager par action sur l'organe de frottement,
- engager le rapport final en positionnant le manchon de crabotage associé,
- réduire progressivement le couple transmis par l'organe de frottement, de sorte que tout le couple soit transmis aux roues par le rapport final, et
- fermer progressivement l'embrayage.

Un exemple de réalisation de l'invention est décrit de manière non limitative en relation avec les figures parmi lesquelles :
- les figures 1a et 1b, déjà décrites, montrent un manchon de crabotage et un pignon fou conventionnels dans diverses positions relatives ;
- la figure 2a, 2b, 2c, 2d montrent un manchon de crabotage et un pignon fou pourvus de crabots auto-éjectants dans diverses positions relatives ;
- la figure 3 montre un schéma de l'architecture d'une boîte de vitesses à dérivation de couple ;
- la figure 4 est un schéma représentant le contact entre les faces de deux crabots conformes à l'invention ;
- la figure 5 représente l'évolution des couples transmis respectivement par le moteur via les crabots du rapport initial et par l'organe de friction lors d'un changement de rapport dans une boite à dérivation de couple ne mettant pas en oeuvre le procédé selon l'invention ;
- la figure 6 représente l'évolution de ces mêmes couples dans une boîte de vitesses mettant en oeuvre l'invention ;
- La figure 7 montre une variante de réalisation de crabots selon l'invention.

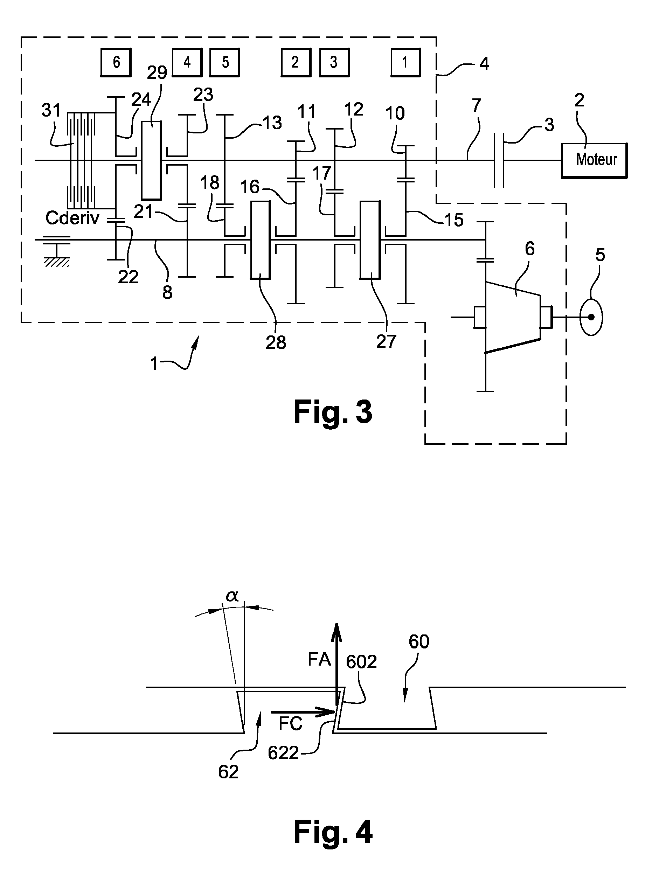

La figure 3 montre une chaîne 1 de traction d'un véhicule automobile formée par un moteur 2, un embrayage 3, une boîte de vitesses 4 (sur la figure délimitée par une ligne fermée discontinue), et des axes de sortie du différentiel vers les roues 5. L'embrayage 3 est relié d'une part au moteur 2 et d'autre part à la boîte 4 de vitesses. Un différentiel 6 assure la liaison entre l'arbre secondaire 8 et les roues 5 du véhicule.

En variante, la chaîne 1 de traction est complétée par une machine électrique (non représentée) positionnée sur l'arbre d'entrée de la boîte 4 de vitesse entre l'embrayage 3 et la boîte 4 de vitesses.

Plus précisément, la boîte 4 de vitesses comporte un arbre 7 primaire relié à l'embrayage 3 et un arbre 8 secondaire relié aux roues 5. L'arbre 7 primaire est un arbre simple et non un arbre concentrique comme dans la plupart des boîtes de vitesses à double embrayage.

Ces deux arbres 7 et 8 sont reliés entre eux par l'intermédiaire d'engrenages formant les rapports de vitesse 1 à 6 encadrés sur la figure. Les rapports de 1^{ère}, 2^{ème}, 3^{ème} et 5^{ème} sont formés chacun par une roue 10-13 entraînée par l'arbre 7 primaire et un pignon fou 15-18 relié à l'arbre 8 secondaire. Tandis que les rapports de 4^{ème} et 6^{ème} sont formés chacun par une roue 21-22 entraînée par l'arbre 8 secondaire et un pignon fou 23-24 relié à l'arbre 7 primaire.

Les rapports de vitesses sont rassemblés par paire avec un seul manchon de crabotage 27-29 qui engage l'un des deux pignons fous des engrenages par déplacement axial dans une direction et l'autre pignon par déplacement dans la direction opposée.

Ces paires de pignons sont agencées d'une manière permettant d'engager deux rapports numériquement successifs avec des manchons différents: par exemple et de manière non limitative (1-4 ; 2-5 ; 3-6) ou (1-3 ; 4-6 ; 2-5), comme représenté.

Ainsi, les manchons 27 et 28 montés sur l'arbre secondaire 8 sont respectivement positionnés entre les rapports de 1^{ère} et 3^{ème} et entre les rapports de 2^{ème} et de 5^{ème}. Tandis que le manchon 29 monté sur l'arbre 7 primaire est positionné entre les rapports de 4^{ème} et de 6^{ème}.

De préférence, une combinaison de rapports de type (1-4 ; 2-5 ; 3-6) est telle qu'elle permet d'avoir un mouvement des actionneurs pilotant les crabots dans un même sens pour un passage successif : le sens de dégagement du rapport de 1^{ère} est le même que le sens d'engagement du rapport suivant la 2^{ème} et ainsi de suite.

En outre, un organe 31 de couplage par friction est disposé sur le rapport le plus élevé, dans l'exemple le rapport de 6^{ème}. Cet organe 31 de friction a pour rôle d'égaliser les vitesses lors des changements de rapports montants (autrement dit d'amener le manchon de crabotage et le pignon à engrener à des vitesses de rotation identiques avant de réaliser le crabotage) tout en permettant la transmission de couple lors de ces changements de rapport.

En variante, la boîte de vitesses comporte six rapports et l'organe 31 est associé au rapport de 3^{ème}, 4^{ème} ou de 5^{ème}.

En variante, la boîte de vitesses comporte six rapports et deux organes 31 sont associés aux rapports de 3^{ème} et de 6^{ème}.

En variante, la boîte 4 de vitesses comporte un deuxième arbre secondaire (non représenté), les paires de pignons fous étant alors réparties entre ces trois arbres.

La figure 4 montre les forces exercées au niveau des faces en contact des crabots, respectivement une dent 60 d'un manchon de crabotage et une dent 62 d'un pignon fou. Au niveau des faces en contact 602, 622, qui présentent un angle d'anti-lâcher α, est exercée une force tangentielle F_{c}, qui est fonction du rayon moyen du crabot et du couple transmis au niveau du contact, ce couple étant lui-même fonction du couple moteur transmis et du rapport de démultiplication concerné. Du fait de l'inclinaison des faces en contact (angle d'anti-lâcher a), la force axiale Fₐ qu'il est nécessaire d'exercer pour désengager le manchon de crabotage est fonction de la force tangentielle F_{c} et de l'angle d'anti-lâcher α. On comprend donc que plus la force F_{c} est importante, plus la force Fₐ nécessaire à l'extraction du manchon sera grande.

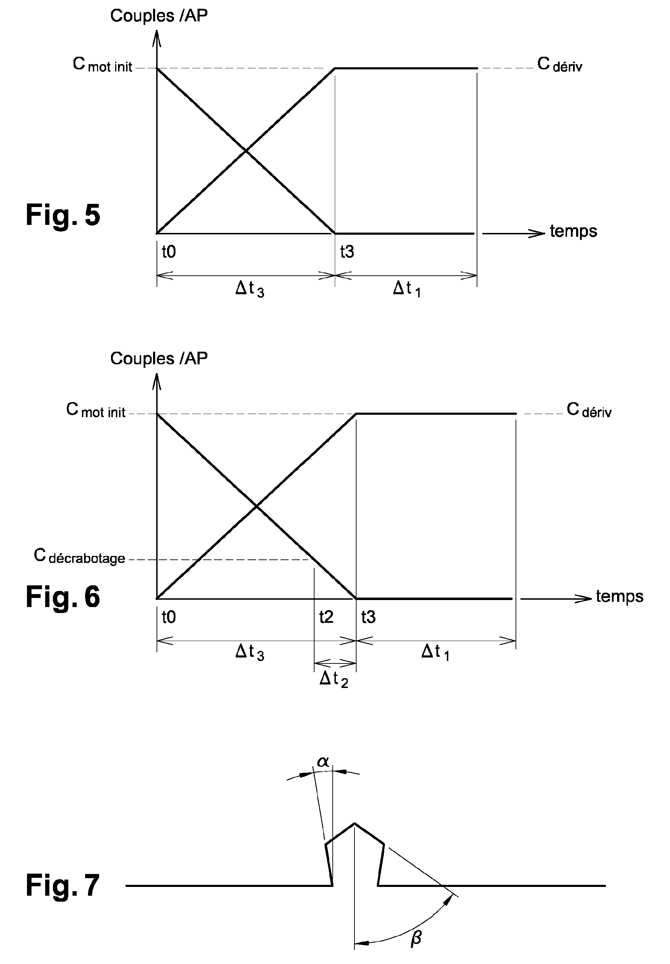

La figure 5 représente l'évolution des couples transmis respectivement par le moteur Cₘₒₜ via les crabots du rapport initial et par l'organe de friction C_{dériv} lors d'un changement de rapport, dans le cas d'une boîte de vitesses ne mettant pas en oeuvre le procédé de précontrainte selon l'invention. L'instant t₀ correspond au début de l'actionnement de l'organe 31 de dérivation de couple, tandis que l'instant t₃ à la fin de transmission du couple par les crabots du rapport initial. Si l'on ne met pas en oeuvre le procédé de précontrainte selon l'invention, c'est à partir de cet instant t₃ que l'on applique l'effort de désengagement sur la fourchette qui entraîne le manchon concerné. On dispose donc d'un temps Δt₁ pour désengager le rapport initial, c'est-à-dire pour parcourir la course équivalente à la hauteur des crabots, avant d'observer le choc crabot sur les faces rétro. Il est donc indispensable d'être extrêmement rapide (ce qui nécessite une dynamique élevé des actionneurs, impliquant donc une augmentation des coûts) ou d'augmenter le jeu angulaire (ré-attelage) pour contourner ce risque ce qui, comme expliqué plus haut est néfaste au bon fonctionnement de la boîte.

La figure 6 est un schéma analogue à celui de la figure 5 mais dans le cas d'une boîte mettant en oeuvre le procédé selon l'invention. Comme pour la figure précédente, les courbes des couples transmis respectivement par le moteur Cₘₒₜ via les crabots du rapport initial et par l'organe de friction C_{dériv} lors d'un changement de rapport sont représentées. Le couple C_{décrabotage} est une valeur particulière de la courbe de couple Cₘₒₜ. Elle correspond à la valeur de couple ramené à l'arbre primaire en dessous duquel l'effort axial de précontrainte appliqué sur la fourchette permet de déplacer le manchon pour désengager le rapport (alors qu'un couple résiduel est toujours transmis par les faces en contact). C'est-à-dire qu'en appliquant un effort de précontrainte sur la fourchette à partir de l'instant t₂, le manchon commence à se déplacer axialement. On dispose donc d'un temps Δt₂ pour parcourir la course équivalente à la hauteur du crabot avant que le manchon ne commence à parcourir le jeu angulaire de ré-attelage.

Selon l'invention, ce couple équivalent C_{décrabotage} est voulu constant quelque soit le rapport de démultiplication considéré et le positionnement des crabots (sur l'arbre primaire ou l'arbre secondaire). En effet, d'une part la valeur de couple a un impact direct sur le ressenti du changement de rapport par le conducteur (le trou de couple ressenti est directement proportionnel à cette valeur), et, d'autre part cela permet de simplifier le pilotage de la boîte de vitesses. Pour garantir ce résultat, selon l'invention, les divers manchons de crabotage et pignons fous de la boîte présentent des angles d'anti-lâcher différents selon les rapports concernés. En effet, comme expliqué plus haut en relation avec la figure 4, la force axiale nécessaire au désengagement d'un manchon de crabotage est fonction du couple transmis et de l'angle d'anti-lâcher, le couple transmis étant dépendant du rapport de démultiplication concerné, celui-ci étant décroissant du premier rapport au rapport final. Si l'on veut que cette force axiale soit constante quel que soit le rapport de démultiplication, il faut donc que les angles d'anti-lâcher augmentent du premier au dernier rapport. Ainsi, le pignon fou de premier rapport sera celui qui présente l'angle d'anti-lâcher le plus faible, et le pignon fou du rapport final présentera l'angle d'anti-lâcher le plus fort. Cette condition n'est toutefois vraie que dans le cas où les pignons fous sont tous disposés sur l'arbre secondaire. Dans tous les cas, chaque angle d'anti-lâcher sera calculé de manière à nécessiter une force axiale de désengagement identique et égale à l'effort de précontrainte appliqué aux fourchettes.

Ainsi, grâce à l'invention, il est possible de réduire considérablement le jeu de ré-attelage, tout en garantissant un pilotage simple de la boîte de vitesses (on fournit un effort fixe et prédéterminé sur les fourchettes, et on supprime l'exigence de dynamique élevée pour les actionneurs). De plus, on élimine totalement le risque de blocage cinématique des crabots : on est ainsi certain de désengager correctement le rapport initial sans observer de choc des crabots contre les faces rétro.

On décrit ci-après le procédé de changement de rapport selon l'invention, au travers de l'exemple d'un passage montant du rapport de 2^{ème} au rapport de 3^{ème} sous couple moteur (« tirage »).

Dans l'état 0 (initial) : le couple moteur est transmis par les faces tirage des crabots du pignon en contact avec celles du manchon.

Dans l'état 1 : on diminue le couple transmissible par l'embrayage principal, et on applique un effort de précontrainte sur la fourchette considérée.

Dans l'état 2 : on actionne le système de dérivation de couple sur le rapport supérieur. A partir de cet instant, le couple du système de dérivation augmente progressivement mais les faces initialement en contact (rapport initial) le sont toujours. A partir du moment t₂ (cf. figure 6), l'effort de précontrainte est suffisant pour permettre le déplacement axial du manchon considéré, mais le contact existe toujours. Pendant ce temps, le couple transmis par le système de dérivation de couple augmente progressivement, ce qui facilite d'autant plus le déplacement axial du manchon.

Dans l'état 3, soit à l'instant t₃, le manchon a parcouru la totalité de la course équivalente à la hauteur du crabot. Le contact n'existe donc plus. Le couple transmis par le système de dérivation de couple est à présent suffisamment élevé pour permettre à l'arbre primaire (ainsi que les pièces qui lui sont liées) de décélérer jusqu'à atteindre le régime cible (équivalent au régime de rotation du pignon du rapport à engager, dans l'exemple celui de 3^{ème}).

Dans l'état 4 : lorsque l'on a atteint l'égalité des régimes, le rapport de 3^{ème} est alors engagé et l'effort appliqué sur le système de dérivation de couple est relâché. Il ne transmet donc plus de couple et le couple moteur est intégralement transmis par le rapport venant d'être engagé. On ferme alors l'embrayage principal.

Dans l'état 5 : Le rapport de 3^{ème} est engagé.

En variante, comme décrit à la figure 7, on prévoit des crabots présentant des faces de « dévirage », formant avec la direction axiale un angle de dévirage β. L'avantage de ces faces de dévirage est qu'elles permettent d'éviter toute difficulté d'engagement à faible différentiel de régime de rotation. De tels crabots sont notamment utilisés dans les synchroniseurs de boîte de vitesses et sont donc très répandus, ce qui permet d'en limiter les coûts de fabrication.

## Revendications

1. Boîte (4) de vitesses de type mécanique pilotée comportant :
- un arbre (7) primaire destiné à être relié à un moteur (2), et un arbre (8) secondaire destiné à être relié aux roues (5) du véhicule, ces deux arbres (7, 8) étant reliés entre eux par des engrenages formant les rapports de vitesse,
- ces engrenages comportant chacun une roue (10-13, 21, 22) solidaire en rotation d'un des arbres et un pignon fou (15-18, 23, 24) monté sur l'autre arbre qui engrènent entre eux, et
- des manchons de crabotage (27-29), munis de crabots (60) et associables chacun à deux pignons fous, également munis de crabots (62), ces manchons de crabotage (27-29) assurant le changement des rapports de vitesse,
- un organe (31) de friction associé à un rapport de démultiplication, cet organe (31) de friction transmettant du couple par glissement de manière temporaire lors des changements de rapports via ce rapport de démultiplication,
- des moyens pour exercer, lors d'un changement de rapport, un effort prédéterminé de désengagement sur le manchon de crabotage (28) du rapport initial pour le désengager avant que le couple transmis via ce rapport initial ne soit nul, **caractérisé en ce que** les faces d'appui des crabots (60, 62) présentent un angle α par rapport à la direction axiale, dit angle d'anti-lâcher, la valeur de cet angle α étant fonction du rapport de démultiplication concerné de sorte que la force axiale Fa nécessaire au désengagement d'un manchon de crabotage (27-29) lors d'un changement de rapport soit inférieure ou égale à l'effort prédéterminé exercé sur le manchon de crabotage du rapport concerné.

2. Boîte de vitesses selon la revendication 1, dans laquelle la valeur de l'angle α d'anti-lâcher de chaque rapport est telle que la force axiale Fₐ nécessaire au désengagement d'un manchon de crabotage (27-29) lors d'un changement de rapport est identique pour tous les rapports de démultiplication de la boîte de vitesses.

3. Boîte de vitesses selon la revendication 1 ou 2, dans laquelle, lorsque tous les pignons fous (15-18, 23, 24) sont disposés sur l'arbre primaire (7), l'angle d'anti-lâcher α est croissant du premier rapport au rapport final.

4. Boîte de vitesses selon l'une des revendications 1 à 3, dans laquelle la valeur de l'effort prédéterminé de désengagement est déterminée de manière à ce que le désengagement se produise lorsque la valeur du couple transmis par le pignon du rapport initial atteint une valeur seuil, dite couple de décrabotage C_{décrabotage,}

5. Boîte de vitesses selon la revendication 4, dans laquelle la valeur seuil du couple de décrabotage est fixée en fonction d'un niveau acceptable de confort ressenti lors du changement de rapport.

6. Boîtes de vitesses selon l'une des revendications précédentes, dans laquelle les crabots (62) des pignons fous présentent une face de dévirage formant un angle de dévirage β avec la direction axiale.

7. Boîte de vitesses selon l'une des revendications précédentes, **caractérisée en ce qu'**elle comporte un deuxième arbre secondaire.

8. Procédé de changement de rapport de vitesses pour passer d'un rapport initial à un rapport final, ce procédé mettant en oeuvre la boîte (4) de vitesses définie selon l'une des revendications 1 à 7 et comportant les étapes suivantes :
- ouvrir l'embrayage (3) de manière à le mettre à la limite du couple fourni par le moteur (2),
- actionner l'organe (31) de frottement de manière à réduire progressivement le couple transmis par le rapport initial jusqu'au couple nul,
- exercer un effort prédéterminé de désengagement du manchon de crabotage du rapport initial, cet effort étant exercé avant que le couple transmis par le rapport initial ne soit nul, afin le manchon de crabotage du rapport initial soit totalement désengagé avant que ce couple ne devienne nul.
- piloter la diminution du régime de l'arbre (7) primaire jusqu'à atteindre sensiblement le régime du rapport final à engager par action sur l'organe (31) de frottement,
- engager le rapport final en positionnant le manchon de crabotage (27) associé,
- réduire progressivement le couple (Cdériv) transmis par l'organe (31) de frottement, de sorte que tout le couple soit transmis aux roues (5) par le rapport final, et
- fermer progressivement l'embrayage (3).
